# EUROPEAN PATENT APPLICATION

(11) **EP 2 487 778 A2**
(43) Date of publication of application: **15.08.2012**
(21) Application number: 12154830.9
(22) Date of filing: 10.02.2012
(51) Int. Cl.: H02K 9/19

(54) **Flooded variable speed electric machine with variable flow**

(30) Priority: 11.02.2011 US 201113025374
(71) Applicant: Hamilton Sundstrand Corporation, Windsor Locks, CT 06096-1010 (US)
(72) Inventor: Shah, Mahesh J., Lindenhurst, IL 60046 (US); Duffek, Darrell, Pleasant Prairie, WI 53158 (US)
(74) Representative: Hughes, Andrea Michelle

(57) **Abstract**

An electric machine includes a rotor (40), a stator (38), and an air gap (42) defined by a space between the rotor and a stator. A volume of cooling fluid (34) is located in the air gap and in contact with both the rotor and the stator. A method for cooling the electric machine includes sensing speed of the electric machine and varying the volume of coolant located in the air gap in response to the sensed speed of the electric machine.

## Description

### BACKGROUND

The present invention relates to electric machines, and more particularly, to cooling systems for flooded, variable speed electric machines.

Electric machines, such as motors and generators, are power conversion devices. The power conversion in electric machines is associated with mechanical friction and electrical losses that result into heat. The heat generated is undesirable and therefore, conventional methods cool electric machines with air, liquid, or a combination of air and liquid. There are at least three different kinds of liquid cooled electrical machines, viz; (a) Back iron cooled, (b) Spray oil cooled and (c) flooded (submerged in oil).

### SUMMARY

A flooded electric machine is disclosed. The flooded electric machine includes a fluid-tight housing, a rotor located within the housing, and a stator located within the housing and spaced a radial distance from the rotor. An air gap is defined by the radial distance between the rotor and the stator. The flooded electric machine further includes a volume of cooling fluid located within the air gap and in contact with both the rotor and the stator. A controller adjusts the volume of cooling fluid in the air gap as a function of speed of the electric machine.

A cooling system for a variable speed electric machine having a rotor, a stator, and an air gap defined between rotor and the stator is also disclosed. The cooling system includes a volume of coolant located in the air gap and in contact with both the rotor and the stator. A reservoir for storing coolant is in closed-loop fluid communication with the electric machine. At least one pump for moving coolant between the electric machine and the reservoir is located on a conduit between the reservoir and the electric machine. A sensor for sensing information about the electric machine is associated with the electric machine. A controller receives the sensed information about the electric machine and varies speed of the at least one pump in response, so that the volume of coolant within the air gap of the electric machine varies as a function of the sensed information.

A method for cooling an electric machine having a rotor, a stator, and an air gap defined by a space between the rotor and a stator is also disclosed. The method includes sensing speed of the electric machine and varying a volume of coolant located in the air gap in response to the sensed speed of the electric machine.

### BRIEF DESCRIPTION OF THE DRAWINGS

Fig. 1A is a schematic of a cooling system for an electric machine operating at an intermediate speed.

Fig. 1B is a cross section of the electric machine from FIG. 1A.

Fig. 2A is a schematic of the cooling system for the electric machine operating at a low speed.

Fig. 2B is a cross section of the electric machine from FIG. 2A.

Fig. 3A is a schematic of the cooling system for the electric machine operating at a high speed.

Fig. 3B is a cross section of the electric machine from FIG. 3A.

### DETAILED DESCRIPTION

The present disclosure provides a system for cooling a flooded, variable speed electric machine that maximizes the machine's efficiency. Electric machine efficiency can be measured as a function of the energy losses incurred during operation. Energy losses can be either electrical or mechanical in nature. Electrical losses include iron and copper, while mechanical losses include friction and windage. Windage losses increase as a cubic function of the machine's speed. The presently disclosed cooling system minimizes windage losses and maximizes cooling efficiency for the electric machine by varying the amount of coolant within the electric machine in an inverse relationship with speed of the electric machine.

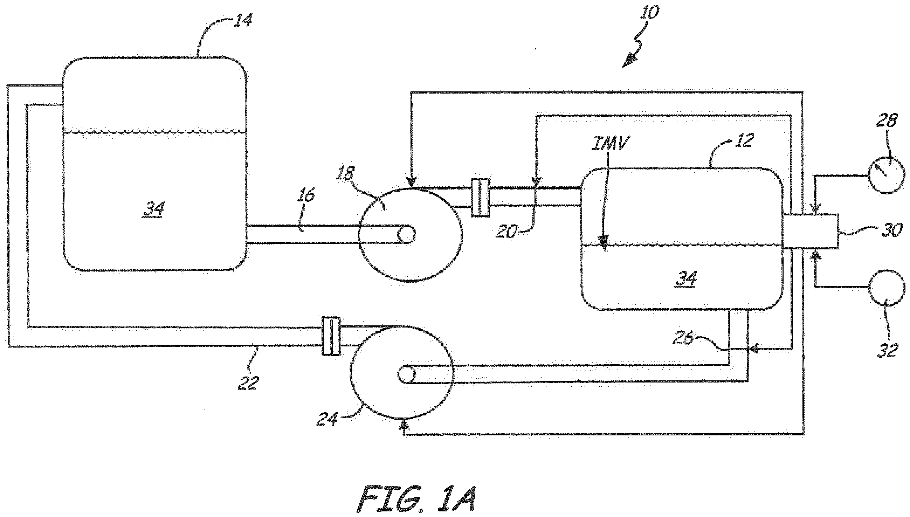

Fig. 1A is a schematic of cooling system 10 for electric machine 12 operating at an intermediate speed. Depicted in Fig. 1A are components of cooling system 10 for electric machine 12: reservoir 14, feed conduit 16, feed pump 18, feed orifice 20, return conduit 22, return pump 24, return orifice 26, speed sensor 28, controller 30, fluid or coolant sensor 32, and cooling fluid or coolant 34. Cooling system 10 provides coolant 34 to electric machine 12 to manage heat generated during the operation of electric machine 12.

Electric machine 12 is in fluid communication with reservoir 14 via a closed-loop coolant 34 circuit operated by cooling system 10. The coolant 34 circuit or loop of cooling system 10 includes a feed side (feed conduit 16, feed pump 18, and feed orifice 20), and an opposite return side (return conduit 22, return pump 24, and return orifice 26). Feed conduit 16 extends between and connects reservoir 14 to electric machine 12. Located approximately half way along feed conduit 16 is feed pump 18. Located between feed pump 18 and electric machine 12 is feed orifice 20. Feed pump 18 and feed orifice 20 are electrically connected to controller 30. Similarly, return conduit 22 extends between and connects electric machine 12 to reservoir 14. Located approximately half way along return conduit 22 is return pump 24. Located between return pump 24 and electric machine 12 is return orifice 26. Return pump 24 and return orifice 26 are electrically connected to controller 30. Speed sensor 28 and coolant sensor 32 are both electrically connected to controller 30. In the depicted embodiment, intermediate machine volume (IMV) of coolant 34 is located within electric machine 12.

Electric machine 12 can be a generator, a motor, or a combination generator and motor for either commercial or industrial purposes. Electric machine 12 is submerged or "flooded" with coolant 34 (e.g. oil). Coolant 34 is stored in reservoir 14 and provided to electric machine 12 via the feed side of coolant 34 loop. More specifically, coolant 34 flows from reservoir 14, through feed conduit 16 and into electric machine 12. While traversing feed conduit 16, coolant 34 flows through feed pump 18 and then, through feed orifice 20. Feed pump 18 is a variable speed pump for pumping coolant 34 at a given speed from reservoir 14 to electric machine 12. Feed orifice 20 is either a fixed or variable orifice for allowing either full flow or a reduced/partial/no flow of coolant 34 into electric machine 12. From electric machine 12, coolant 34 flows back to reservoir 14 via the return side of coolant 34 loop. More specifically, coolant 34 flows from electric machine 12, through return conduit 22 and into reservoir 14. While traversing return conduit 22, coolant 34 flows through return orifice 26 and then, return pump 24. Return orifice 26 is either a fixed or variable orifice for allowing either full flow or a reduced/partial/no flow of coolant 34 out of electric machine 12. Return pump 24 is a variable speed pump for pumping coolant 34 at a given speed from electric machine 12 to reservoir 14. Each of feed pump 18, feed orifice 20, return pump 24, and return orifice 26 are controlled by controller 30 to reduce windage losses within, and maximize the cooling efficiency of, electric machine 10.

In operation, electric machine 12 has a certain frequency or rotational speed, which is sensed by speed sensor 28. Speed sensor 28 sends the sensed speed of machine 12 to controller 30. Controller 30 uses the sensed speed of electric machine 12 to determine the optimal fluid level or volume of coolant 34 within electric machine 12. Controller 30 references the sensed speed of electric machine 12 in a look-up table to determine the optimal fluid level of coolant 34 for electric machine 12 operating at given speed. The optimal fluid level of coolant 34 is a value determined during manufacturing that reduces windage losses and maximizes cooling efficiency for electric machine 12 operating at a given speed. Controller 30 adjusts the parameters of one or more of feed pump 18, feed orifice 20, return orifice 26, and return pump 24 to augment the amount of coolant 34 within electric machine 12 so it more closely approximates the optimal fluid level. Coolant sensor 32 is optionally included in cooling system 10 to aid in sensing the current volume of coolant 34 within electric machine 12 and providing feedback to controller 30.

In Fig. 1A, electric machine 12 is operating at an intermediate speed. Speed sensor 28 senses that electric machine 12 is operating at the intermediate speed an provides the intermediate speed signal to controller 30. Controller 30 references the intermediate speed of electric machine 12 in the look-up table and determines that an intermediate amount of coolant 34 or intermediate machine volume (IMV) is optimal. The controller 30 then sets the parameters of feed pump 18, feed orifice 20, return pump 24, and/or return orifice 26 to achieve IMV within electric machine 12. If more coolant 34 is needed within electric machine 12, controller 30 can increase feed pump 18 speed to pump coolant 34 from reservoir 14 to machine 12 more quickly, enlarge/open feed orifice 20 to allow coolant 34 flow into electric machine 12 more quickly, constrict/close return orifice 26 to reduce coolant 34 flow out of electric machine 12, and/or decrease return pump 24 speed to reduce coolant 34 flow from electric machine 12 to reservoir 14. If less coolant 34 is needed within electric machine 12, controller 30 can decrease feed pump 18 speed to pump coolant 34 from reservoir 14 to machine 12 more slowly, constrict/close feed orifice 20 to reduce coolant 34 flow into electric machine 12, enlarge/open return orifice 26 to increase coolant 34 flow out of electric machine 12, and/or increase return pump 24 speed to pump coolant 34 flow from electric machine 12 to reservoir 14 more quickly. Coolant sensor 32 can provide feedback to controller 30 regarding the achievement of IMV such that controller 30 can further augment or fine tune the parameters of cooling system 10 to actualize IMV.

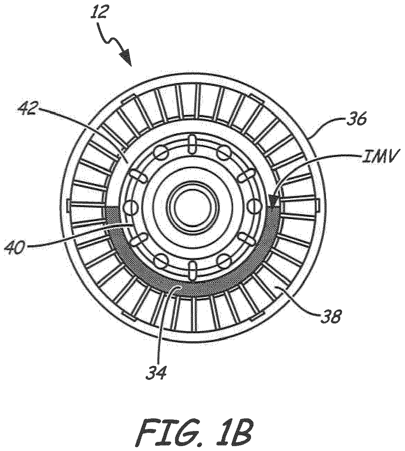

Fig. 1B is a cross section of electric machine 12 from FIG. 1A operating at the intermediate speed and actualizing IMV. Depicted in Fig. 1B are components of electric machine 12: coolant 34, housing 36, stator 38, rotor 40, and air gap 42. When electric machine 12 is operating at the intermediate speed and coolant 34 level is at IMV, windage losses are minimized and cooling efficiency is maximized.

The working parts of electric machine 12 are contained within fluid-tight housing 36. Housing 36 is the outermost radial portion of electric machine 12. Located radially within housing 36 is stator 38, the stationary portion of electric machine 12. Located radially within stator 38 is rotor 40, the rotating portion of electric machine 12. A mechanical air gap 42 extends radially between an innermost portion of stator 38 and an outermost portion of rotor 40. Coolant 34 is located in air gap 42 and is in contact with both the innermost portion of stator 38 and the outermost portion of rotor 40. In Fig. 1B, electric machine 12 is operating at the intermediate speed and therefore, IMV is the optimal amount of coolant 34. As shown, IMV fills about half of air gap 42. For the intermediate speed of electric machine, IMV strikes the balance between minimizing windage losses and maximizing cooling efficiency. Electric machine 12, however, is a variable speed machine and will require different levels of coolant 34 when operating at different speeds.

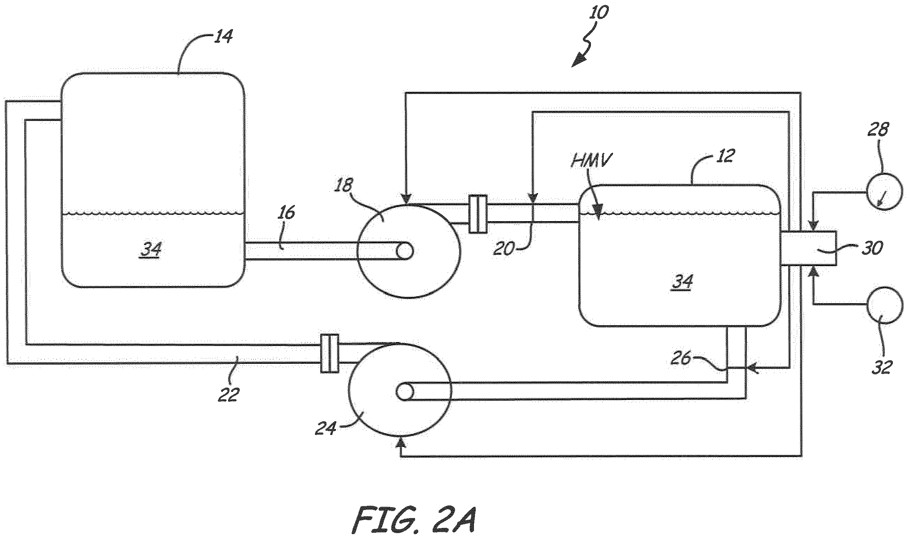

Fig. 2A is a schematic of cooling system 10 for electric machine 12 operating at a low speed. Depicted in Fig. 2A are components of cooling system 10 for electric machine 12: reservoir 14, feed conduit 16, feed pump 18, feed orifice 20, return conduit 22, return pump 24, return orifice 26, speed sensor 28, controller 30, coolant sensor 32, and coolant 34. Fig. 2A is substantially similar to Fig. 1A and shows the same components of cooling system 10. The differences between Fig. 2A and Fig. 1A will be highlighted below.

In Fig. 2A, the speed of electric machine is reduced from the intermediate speed shown in Fig. 1A. Speed sensor 28 senses that electric machine 12 is operating at a relatively low speed and provides the low speed signal to controller 30. Controller 30 references the low speed of electric machine 12 in the look-up table and determines that a relatively high amount of coolant 34 or high machine volume HMV is optimal. The controller 30 then sets the parameters of feed pump 18, feed orifice 20, return pump 24, and/or return orifice 26 to achieve HMV within electric machine 12. Since more coolant 34 is needed within electric machine 12 (in comparison to IMV depicted in Fig. 1A), controller 30 can increase feed pump 18 speed to pump coolant 34 from reservoir 14 to machine 12 more quickly, enlarge/open feed orifice 20 to allow coolant 34 flow into electric machine 12 more quickly, constrict/close return orifice 26 to reduce coolant 34 flow out of electric machine 12, and/or decrease return pump 24 speed to reduce coolant 34 flow from electric machine 12 to reservoir 14. Augmenting one or more of these parameters will cause more coolant 34 to move from reservoir 14 into electric machine 12 and increase IMV to HMV. Coolant sensor 32 can provide feedback to controller 30 regarding the achievement of HMV such that controller 30 can further augment or fine tune the parameters of cooling system 10 to actualize HMV.

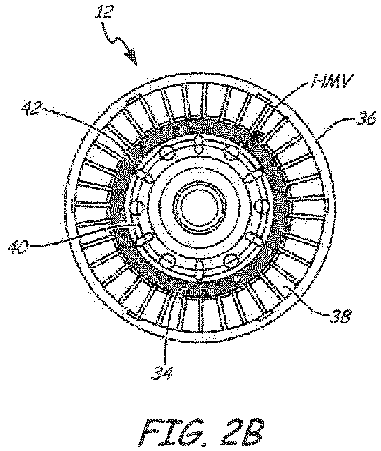

Fig. 2B is a cross section of electric machine 12 operating at the low speed from FIG. 2A. Depicted in Fig. 2B are components of electric machine 12: coolant 34, housing 36, stator 38, rotor 40, and air gap 42. Fig. 2B is substantially similar to Fig. 1B and shows the same components of electric machine 12. In Fig. 2B, electric machine 12 is operating at the low speed and therefore, HMV is the optimal amount of coolant 34. As shown, HMV substantially fills air gap 42 and coolant 34 is in contact with both the innermost portion of stator 38 and the outermost portion of rotor 40. For the low speed of electric machine 12, windage losses are less problematic and more coolant 34 is optimal.

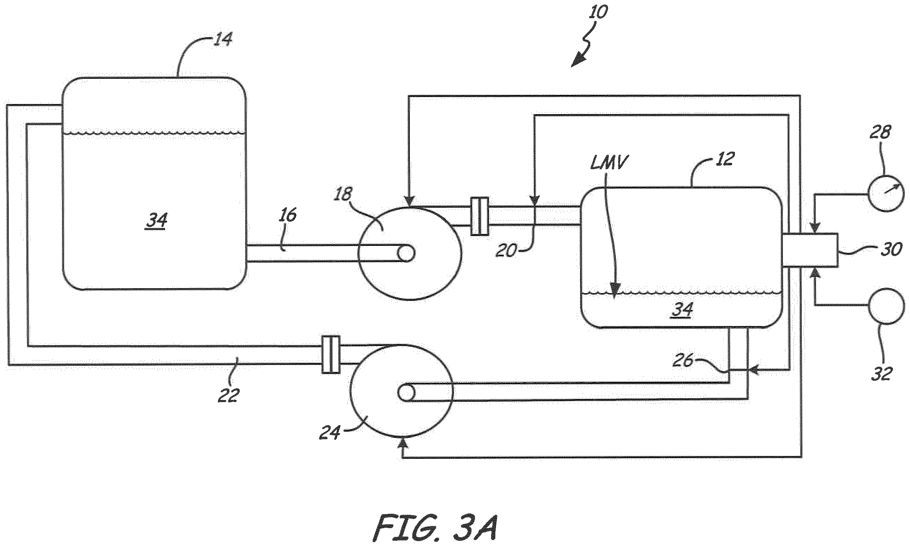

Fig. 3A is a schematic of cooling system 10 for electric machine 12 operating at a high speed. Depicted in Fig. 3A are components of cooling system 10 for electric machine 12: reservoir 14, feed conduit 16, feed pump 18, feed orifice 20, return conduit 22, return pump 24, return orifice 26, speed sensor 28, controller 30, coolant sensor32, and coolant 34. Fig. 3A is substantially similar to Figs. 1A & 2A and shows the same components of cooling system 10. The differences between Fig. 3A and Figs. 1A & 2A will be highlighted below.

In Fig. 3A, the speed of electric machine is increased from either the intermediate speed shown in Fig. 1A or the low speed shown in Fig. 2A. Speed sensor 28 senses that electric machine 12 is operating at a relatively high speed and provides the high speed signal to controller 30. Controller 30 references the high speed of electric machine 12 in the look-up table and determines that a relatively low amount of coolant 34 or low machine volume LMV is optimal. The controller 30 then sets the parameters of feed pump 18, feed orifice 20, return pump 24, and/or return orifice 26 to achieve LMV within electric machine 12. Since less coolant 34 is needed within electric machine 12 (in comparison to IMV depicted in Fig. 1A and/or HMV depicted in Fig. 2A), controller 30 can decrease feed pump 18 speed to pump coolant 34 from reservoir 14 to machine 12 more slowly, constrict/close feed orifice 20 to reduce coolant 34 flow into electric machine 12, enlarge/open return orifice 26 to increase coolant 34 flow out of electric machine 12, and/or increase return pump 24 speed to pump coolant 34 flow from electric machine 12 to reservoir 14 more quickly. Augmenting one or more of these parameters will cause more coolant 34 to move from electric machine 12 to reservoir and decrease IMV or HMV to LMV. Coolant sensor 32 can provide feedback to controller 30 regarding the achievement of LMV such that controller 30 can further augment or fine tune the parameters of cooling system 10 to actualize LMV.

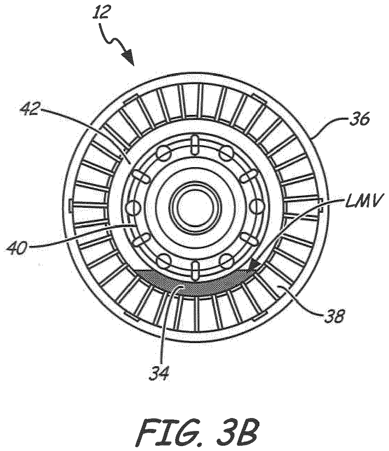

Fig. 3B is a cross section of electric machine 12 operating at a high speed from FIG. 3A. Fig. 3B is substantially similar to Figs. 1B & 2B and shows the same components of electric machine 12. In Fig. 3B, electric machine 12 is operating at the high speed and therefore, LMV is the optimal amount of coolant 34. As shown, LMV fills about a quarter of air gap 42, but coolant 34 is still in contact with both the innermost portion of stator 38 and the outermost portion of rotor 40. For the high speed of electric machine 12, windage losses are most problematic and less coolant 34 is optimal.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A flooded electric machine comprising:
a fluid-tight housing (36);
a rotor (40) located within the housing;
a stator (38) located within the housing and spaced a radial distance from the
rotor;
an air gap (42) defined by the radial distance between the rotor and the stator;
a volume of cooling fluid (34) located within the air gap and in contact with both
the rotor and the stator; and
a controller (30) for adjusting the volume of cooling fluid in the air gap as a
function of speed of the electric machine.

2. The electrical machine of claim 1, wherein the electric machine is a motor, or wherein the electric machine is a generator.

3. The electrical machine of claim 1, wherein the volume of coolant within the air gap is in contact with both the stator and the rotor regardless of the speed of the electric machine.

4. The electrical machine of claim 3, wherein the volume of cooling fluid substantially fills the air gap when the speed of the electrical machine is low.

5. The electrical machine of claim 3, wherein the volume of cooling fluid partially fills the air gap when the speed of the electric machine is high.

6. A cooling system for a variable speed electric machine having a rotor, a stator, and air gap defined between rotor and the stator, the cooling system comprising:
a volume of coolant (34) located in the air gap (42), the volume of coolant in
contact with both the rotor and the stator;
a reservoir (14) for storing coolant, the reservoir in closed-loop fluid
communication with the electric machine;
at least one pump (18) for moving coolant between the reservoir and the electric
machine, the at least one pump located on a conduit between the reservoir and the electric machine;
a sensor (28) for sensing information about the electric machine; and
a controller (30) for receiving the sensed information about the electric machine
and varying speed of the at least one pump in response, so that the volume of coolant within the air gap of the electric machine varies as a function of the sensed information.

7. The system of claim 6, wherein the sensor is a speed sensor for sensing the speed of the electric machine, or wherein the sensor is a coolant level sensor for sensing the volume of coolant in the air gap.

8. The system of claim 6, wherein the at least one pump comprises:
a variable speed feed pump (18) located on a first conduit, the feed pump for
pumping coolant from the reservoir to the electric machine.

9. The system of claim 8, further comprising:
an orifice (20) located in the first conduit between the feed pump and the electric
machine, the orifice for limiting coolant flow into the electric machine.

10. The system of claim 6, wherein the at least one pump comprises:
a variable speed return pump (24) located on a second conduit, the return pump
for pumping coolant from the electric machine to the reservoir.

11. The system of claim 10, further comprising:
an orifice (26) located in the second conduit between the return pump and electric
machine, the orifice for limiting coolant flow out of the electric machine.

12. A method for cooling an electric machine having a rotor, a stator, and an air gap defined by a space between the rotor and a stator, the method comprising:
sensing speed of the electric machine; and
varying a volume of coolant located in the air gap in response to the sensed speed
of the electric machine.

13. The method of claim 12, wherein the volume of coolant in the air gap is in contact with the rotor and the stator regardless of the sensed speed of the electric machine.

14. The method of claim 13, wherein varying the volume of coolant comprises:
increasing the volume of coolant located in the air gap when the sensed speed of
the electric machine is relatively low, such that the air gap contains a relatively large volume coolant, and/or
decreasing the volume of coolant located in the air gap when the sensed speed of
the electric machine is relatively high, such that air gap contains a relatively small volume of coolant.

15. The method of claim 12, further comprising:
sensing the volume of coolant located in the air gap.
